# EUROPÄISCHE PATENTSCHRIFT

(11) **EP 3 260 363 B1**
(45) Veröffentlichungstag und Bekanntmachung des Hinweises auf die Patenterteilung: **20.02.2019**
(21) Anmeldenummer: 17165905.5
(22) Anmeldetag: 11.04.2017
(51) Int. Cl.: B62L 3/06, B62H 5/18

(54) **SPERREINRICHTUNG, SPERRSYSTEM, HYDRAULISCHE BREMSANLAGE, FAHRZEUG UND VERFAHREN ZUM SPERREN**
LOCKING DEVICE, LOCK SYSTEM, HYDRAULIC BRAKE SYSTEM, VEHICLE AND METHOD FOR LOCKING
DISPOSITIF DE VERROUILLAGE, SYSTÈME DE VERROUILLAGE, INSTALLATION DE FREINAGE HYDRAULIQUE, VÉHICULE ET PROCÉDÉ DE VERROUILLAGE

(30) Priorität: 21.06.2016 DE 102016211015
(43) Veröffentlichungstag der Anmeldung: 27.12.2017
(73) Patentinhaber: Robert Bosch GmbH, 70442 Stuttgart (DE)
(72) Erfinder: Greiner, Rinaldo, 72762 Reutlingen (DE); Merkle, Till, 70329 Stuttgart (DE)

(56) Entgegenhaltungen:
- CN-U- 204 341 262
- DE-A1-102013 217 754
- DE-A1-102014 211 767
- DE-U1- 29 811 255
- FR-A1- 3 013 307
- JP-A- H07 108 966

## Beschreibung

### Stand der Technik

Die vorliegende Erfindung betrifft eine Sperreinrichtung, ein Sperrsystem, eine hydraulische Bremsanlage, ein Fahrzeug und ein Verfahren zum Sperren. Die vorliegende Erfindung betrifft insbesondere eine Sperreinrichtung für eine hydraulische Bremsanlage, insbesondere für ein mit Muskelkraft und/oder mit Motorkraft antreibbares Fahrzeug, ein Fahrrad, Elektrofahrrad, eBike, Pedelec oder dergleichen, ein Sperrsystem mit der Sperreinrichtung, eine hydraulische Bremsanlage für ein mit Muskelkraft und/oder mit Motorkraft antreibbares Fahrzeug, ein Fahrrad, Elektrofahrrad, eBike, Pedelec oder dergleichen, sowie ein mit Muskelkraft und/oder mit Motorkraft antreibbares Fahrzeug und insbesondere ein Fahrrad, Elektrofahrrad, eBike, Pedelec oder dergleichen, sowie ein Verfahren zum Sperren einer hydraulischen Bremsanlage.

Im Bereich von Fahrrädern, Elektrofahrrädern, eBikes, Pedelecs oder dgl. besteht bei den Eigentümern aufgrund des vergleichsweise hohen Anschaffungspreises der Wunsch, das Fahrzeug nach Abstellen und Verlassen zu sichern, um dadurch einen Diebstahl zu erschweren oder zu verhindern. Üblicherweise werden dazu verschiedene Formen von Schlössern vorgesehen, die ein Bewegen des Fahrzeugs nur nach einem Entsperren erlauben und/oder das Fahrzeug an einem anderen Gegenstand sichern und dadurch dessen Entfernung erschweren oder verhindern.

Aus der Druckschrift DE 10 2013 217 106 A1 ist ein hydraulisches Bremssystem bekannt, bei welchem über mit zusätzlichen Aktuatoren betätigbare bistabile Ventile ein Feststellen einer Bremse möglich ist. Die Druckschrift FR 3 013 307 A1 zeigt ein hydraulisches Bremssystem mit einer Sperreinrichtung, die manuell mit einem Schlüssel gesperrt werden kann.

Wünschenswert wären Einrichtungen, die nach dem Überwinden eines Schlosses einen zusätzlichen Schutz bereitstellen, indem sie das Fortbewegen des Fahrzeuges nach dem Knacken des Schlosses mit besonders einfachen Mitteln weiter erschweren. Dies ist mit herkömmlichen Schlössern in dieser Form nicht möglich.

### Offenbarung der Erfindung

Die erfindungsgemäße Sperreinrichtung mit den Merkmalen des Anspruchs 1 weist demgegenüber den Vorteil auf, dass auch beim Überwinden herkömmlicher Schlösser das übliche Fortbewegen des Fahrzeugs zuverlässig unterbunden oder zumindest erschwert wird. Dies wird erfindungsgemäß dadurch erreicht, dass eine Sperreinrichtung für eine hydraulische Bremsanlage geschaffen wird, insbesondere für ein mit Muskelkraft und/oder mit Motorkraft antreibbares Fahrzeug, Fahrrad, Elektrofahrrad, eBike, Pedelec oder dergleichen, bei welcher (i) in einem Bremsbetriebszustand ein stromaufwärts und reservoirseitig gelegener Abschnitt einer Bremsleitung der Bremsanlage und ein stromabwärts und bremsseitig gelegener Abschnitt der Bremsleitung der Bremsanlage hydraulisch verbunden sind und (ii) in einem Sperrbetriebszustand der stromaufwärts und reservoirseitig gelegene Abschnitt der Bremsleitung und der stromabwärts und bremsseitig gelegene Abschnitt der Bremsleitung hydraulisch voneinander getrennt sind und der stromabwärts und bremsseitig gelegene Abschnitt der Bremsleitung hydraulisch und druckhaltend abgeschlossen ist. Ein besonders hohes Maß an Zuverlässigkeit und Betriebssicherheit der erfindungsgemäßen Sperreinrichtung stellt sich dadurch ein, dass (iii) ein Volumenstromschieber mit einem Gehäuse und einem Schieberelement ausgebildet ist, (iv) wobei das Schieberelement im Gehäuse steuerbar verschiebbar ist zwischen einer dem Bremsbetriebszustand entsprechenden ersten Stellung und einer dem Sperrbetriebszustand entsprechenden zweiten Stellung. Der Volumenstromschieber ist eingerichtet, (v) das Schieberelement über einen im stromaufwärts und reservoirseitig gelegenen Abschnitt der Bremsleitung herrschenden Druck gesteuert in die dem Sperrbetriebszustand entsprechende zweite Stellung zu verschieben. Im Sperrbetriebszustand ist bei Entkoppelung vom stromaufwärts und reservoirseitig gelegenen ersten Abschnitt der Bremsleitung und der stromabwärts und bremsseitig gelegene Abschnitt der Bremsleitung hydraulisch und druckerhaltend verschaltet und abschließbar ist. Auf diese Weise bleibt auch bei Entkoppelung von der Betätigung der Bremse durch einen Fahrer der Bremsdruck im maßgeblichen Abschnitt der Bremsleitung, nämlich stromabwärts und bremsseitigen, erhalten und somit die jeweilige Bremse im betätigten und folglich verriegelten Zustand. Auf diese Art und Weise kann auch bei Abwesenheit des Fahrers über einen langen Zeitraum die Bremswirkung und somit eine Verriegelung entsprechend mit einer Bremse versehener Räder erzielt werden, so dass auch beim Überwinden herkömmlicher Schlösser das übliche Fortbewegen des Fahrzeugs unterbunden oder zumindest erschwert wird.

Die Unteransprüche zeigen bevorzugte Weiterbildungen der Erfindung.

Der Bremsbetriebszustand und der Sperrbetriebszustand der Sperreinrichtung lassen sich auf besonders einfache Weise realisieren, wenn gemäß einer anderen Weiterbildung der erfindungsgemäßen Sperreinrichtung das Gehäuse des Volumenstromschiebers eine erste, stromaufwärts und reservoirseitig gelegene Hauptöffnung und eine zweite, stromabwärts und bremsseitig gelegene Hauptöffnung aufweist, insbesondere zur hydraulischen Verbindung mit der Bremsleitung der Bremsanlage, wobei (i) in der ersten Stellung des Schieberelements die erste und die zweite Hauptöffnung des Gehäuses hydraulisch verbunden und gekoppelt sind und (ii) in der zweiten Stellung des Schieberelements die erste und die zweite Hauptöffnung des Gehäuses hydraulisch getrennt und entkoppelt sind.

Die Steuerbarkeit der Steuereinrichtung über den Betrieb des Volumenstromschiebers lässt sich besonders zuverlässig gestalten, wenn gemäß einer anderen vorteilhaften Weiterbildung der erfindungsgemäßen Sperreinrichtung das Gehäuse des Volumenstromschiebers eine Steueröffnung aufweist zur hydraulischen Steuerung der Stellung der des Schieberelements, insbesondere über eine hydraulische Verbindung mit einem stromaufwärts und reservoirseitig gelegenen Abschnitt der Bremsleitung der Bremsanlage, vorzugsweise mittels einer Umgehungsleitung.

Dabei ist es von besonderem Vorteil, wenn die Sperreinrichtung einem Steuerventil ausgebildet ist, welches zum gesteuerten Zuführen eines Fluids und so zur hydraulischen Steuerung der Stellung des Schieberelements ausgebildet ist und welches insbesondere mit der Steueröffnung hydraulisch verbunden oder verbindbar und gekoppelt oder koppelbar ist und/oder in der Umgehungsleitung ausgebildet ist.

Um die Betriebssicherheit der erfindungsgemäßen Sperreinrichtung zu steigern, ist es bei einer anderen Weiterbildung vorgesehen, dass das Steuerventil ein im Normalzustand geschlossenes Ventil ist oder aufweist, insbesondere ein stromlos geschlossenes Magnetventil.

Gemäß einem anderen Aspekt der vorliegenden Erfindung wird ein Sperrsystem geschaffen, welche ausgebildet ist mit einer erfindungsgemäßen Sperreinrichtung und mit einer Auswerte- und Steuereinheit, welche zur Steuerung des Zustands der Sperreinrichtung ausgebildet ist, insbesondere über eine Steuerung des Zustands des Steuerventils.

Um den Zugriff auf die erfindungsgemäße Sperreinrichtung durch eine unbefugte und nicht autorisierte Person zu vermeiden, ist es von besonderem Vorteil, wenn das Sperrsystem mit einer Authentifizierungseinheit ausgebildet ist, über welche nur unter Verwendung eines Autorisierungsmittels ein bestehender Sperrbetriebszustand und somit eine Sperrung einer Bremse aufgehoben oder aufgelöst werden kann, insbesondere im Zusammenwirken mit einer Auswerte- und Steuereinheit.

Dabei ist es von besonderem Vorteil, wenn die Authentifizierungseinheit und/oder das Authentifizierungsmittel realisiert werden im Zusammenhang mit einem RFID-Mittel, einem PIN-Mittel, einem Passwortschutz, einem Schutz über biometrische Merkmale oder dergleichen, insbesondere im Zusammenhang mit einer Ultraschall-, Infrarot- und/oder Funkkommunikation, vorzugsweise mittels eines Mobiltelefons.

Ferner betrifft die vorliegende Erfindung eine hydraulische Bremsanlage für ein mit Muskelkraft und/oder mit Motorkraft antreibbares Fahrzeug und insbesondere für ein Fahrrad, Elektrofahrrad, eBike, Pedelec oder dergleichen mit einem Reservoir für ein Bremsfluid, einer Bremse, einer Bremsleitung zur hydraulischen Verbindung des Reservoirs mit der Bremse und einer erfindungsgemäßen Sperreinrichtung, welche in der Bremsleitung integriert ist, und insbesondere mit einem erfindungsgemäßen Bremssystem.

Gemäß einem weiteren Aspekt der vorliegenden Erfindung wird auch ein mit Muskelkraft und/oder mit Motorkraft antreibbares Fahrzeug und insbesondere ein Fahrrad, Elektrofahrrad, eBike, Pedelec oder dergleichen geschaffen mit mindestens einem Rad und einer Bremsanlage zum Bremsen und/oder Sperren des Rades.

Ferner schafft die vorliegende Erfindung auch ein Verfahren zum Sperren einer hydraulischen Bremsanlage, insbesondere für ein mit Muskelkraft und/oder mit Motorkraft antreibbares Fahrzeug, Fahrrad, Elektrofahrrad, eBike, Pedelec oder dergleichen. Bei dem Verfahren werden in einem Bremsbetriebszustand ein stromaufwärts und reservoirseitig gelegener Abschnitt einer Bremsleitung der Bremsanlage und ein stromabwärts und bremsseitig gelegener Abschnitt der Bremsleitung der Bremsanlage hydraulisch verbunden und in einem Sperrbetriebszustand der stromaufwärts und reservoirseitig gelegene Abschnitt der Bremsleitung und der stromabwärts und bremsseitig gelegene Abschnitt der Bremsleitung hydraulisch voneinander getrennt. Dabei wird der stromabwärts und bremsseitig gelegene Abschnitt der Bremsleitung hydraulisch und druckhaltend abgeschlossen. In einem Volumenstromschieber mit einem Gehäuse und einem Schieberelement wird das Schieberelement im Gehäuse gesteuert zwischen einer dem Bremsbetriebszustand entsprechenden ersten Stellung und einer dem Sperrbetriebszustand entsprechenden zweiten Stellung verschoben. Das Schieberelement wird dabei über einen im stromaufwärts und reservoirseitig gelegenen Abschnitt der Bremsleitung herrschenden Druck gesteuert in die dem Sperrbetriebszustand entsprechende zweite Stellung verschoben.

### Kurzbeschreibung der Figuren

Unter Bezugnahme auf die beigefügten Figuren werden Ausführungsformen der Erfindung im Detail beschrieben.
- Figur 1: ist eine schematische Darstellung für ein Beispiel eines Fahrzeugs nach Art eines Elektrofahrrads, bei welchem eine erste Ausführungsform der Erfindung realisiert ist.
- Figur 2: zeigt in schematischer Darstellung nach Art eines Blockdiagramms eine Ausführungsform der erfindungsgemäßen Sperreinrichtung im Zusammenhang mit einer Ausführungsform einer hydraulischen Bremsanlage;
- Figuren 3, 4: zeigen in Blockdiagrammen eine andere Ausführungsform der erfindungsgemäßen hydraulischen Bremsanlage mit einer Ausgestaltungsform der erfindungsgemäßen Sperreinrichtung in einem Bremsbetriebszustand bzw. in einem Sperrbetriebszustand;
- Figuren 5, 6: zeigen in größerem Detail den der Sperreinrichtung aus den Figuren 3 und 4 zugrundeliegenden Volumenstromschieber im Bremsbetriebszustand bzw. im Sperrbetriebszustand der erfindungsgemäßen Sperreinrichtung.

### Bevorzugte Ausführungsformen der Erfindung

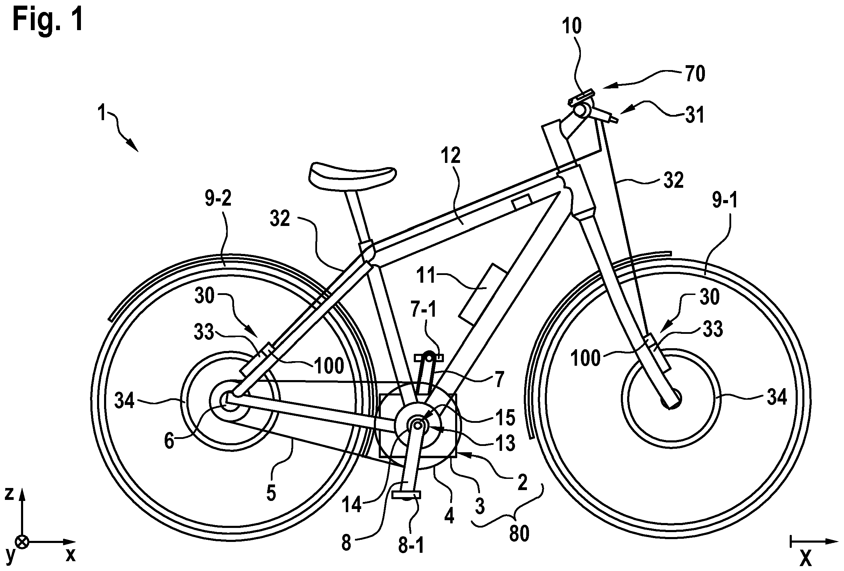

Nachfolgend werden unter Bezugnahme auf die Figuren 1 bis 6 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 sind ein Ritzel 6 und ggf. eine Gangschaltung angeordnet. Kurbeltrieb 2 und elektrischer Antrieb 3 bilden den Antrieb 80 des Fahrzeugs 1.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist bei dieser beispielhaften Ausführungsform ferner eine Steuereinheit 10 angeordnet, welche mit dem elektrischen Antrieb 3 verbunden ist. Die Steuereinheit 10 kann auch an anderer Stelle ausgebildet sein. Im oder am Rahmen 12 ist ferner Batterie 11 ausgebildet, welche zur Stromversorgung des elektrischen Antriebes 3 dient.

Im Rahmen 12 integriert ist ferner ein Kurbellager 13 oder Tretlager, welches ein Kurbelgehäuse 14 und eine Kurbelwelle 15 aufweist.

Im Bereich einer Bremsanlage 30, mittels welcher über Bremsleitungen 32 bei Betätigung des Bremshebels 31 die Bremsen ein Zugriff auf die Bremsschreiben 34 initiierbar ist, ist auch eine Ausführungsform der erfindungsgemäßen Sperreinrichtung 100 vorgesehen, entweder für eine der Bremsen 33 oder für beide Bremsen 33. In der Darstellung der Figur 1 weist die Bremsanlage 30 im Bereich jeder der Bremsen 33 eine eigene Sperreinrichtung 100 auf. Dies ist jedoch nicht zwingend.

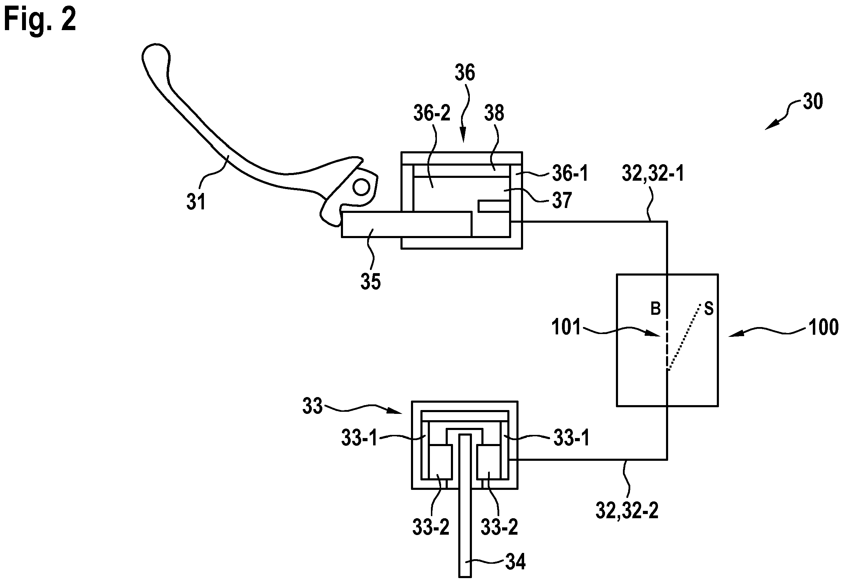

Figur 2 zeigt nach Art eines Blockdiagramms schematisch eine Ausführungsform der erfindungsgemäßen hydraulischen Bremsanlage 30, die mit einer Ausführungsform der erfindungsgemäßen Sperreinrichtung 100 ausgebildet ist.

Dem Kern nach besteht die hydraulische Bremsanlage 30 aus einer Bremsleitung 32, welche einen Betätiger aus Bremshebel 31 und Reservoir 36 für ein Bremsfluid 37 mit der eigentlichen Bremse 33 hydraulisch, also in Fluidkommunikation verbindet.

Die Bremse 33 selbst besteht aus dem Bremssattel 33-1 und den Bremsklötzen 33-2, die bei Betätigung des Bremshebels 31 durch einen Benutzer auf Grund der hydraulischen Verbindung über die Bremsleitung 32 so bewegt werden, dass sie die Bremsscheibe 34 zwischen sich einschließen, dadurch Reibung auf die Bremsscheibe 34 aufbringen und damit die Bremsscheibe 34 und das mit der Bremsscheibe jeweils verbundene Rad 9-1, 9-2 des Fahrzeugs 1 haltern, sperren oder gegebenenfalls abbremsen.

Zur Realisierung der Sperrfunktion, die auch als Abschließfunktion bezeichnet wird, ist in der Bremsleitung 32 eine Ausführungsform der erfindungsgemäßen Sperreinrichtung 100 eingebracht, so dass die Bremsleitung 32 unterteilt wird in einen ersten, reservoirseitigen und stromaufwärts gelegenen Abschnitt 32-1 und einen zweiten, bremsseitig und stromabwärts gelegenen Abschnitt 32-2.

Zur Realisierung des Bremsbetriebszustands und des Sperrbetriebszustands weist die Sperreinrichtung ein Sperrelement 101 auf, welches in der Figur 2 in der Stellung B den Bremsbetriebszustand realisiert und mithin die ungehinderte hydraulische Verbindung zwischen Bremse 33 und Reservoir 36, welches auch als Zylinder bezeichnet wird, gestattet.

Das Sperrelement 101 ist darüber hinaus in der Lage, eine Stellung S einzunehmen, in welcher der erste Abschnitt 32-1 der Bremsleitung 32 und der zweite Abschnitt 32-2 der Bremsleitung 32 voneinander hydraulisch entkoppelt sind, wobei der zweite Abschnitt 32-2 druckdicht abgeschlossen wird, so dass der Druck im zweiten, bremsseitig und stromabwärts gelegenen Abschnitt 32-2 der Bremsleitung 32 gehalten wird, so dass gegebenenfalls die Bremse 33 verriegelt in einem Bremszustand gesperrt verbleibt, bei welchem die Bremsklötze 33-2 die Bremsscheibe gegen Bewegung sperren.

Zur Betätigung der Bremse 33 ist der Bremshebel 31 mit einem Kolben 35 verbunden, welcher bei Betätigung des Hebels 31 Volumen im Reservoir oder Zylinder 36 verdrängt und somit das Bremsfluid 37 aus dem im Inneren des Zylinders 36 in die Bremsleitung 32 treibt. Der dadurch entstehende Druck wird in der Bremsleitung 32 hydraulisch zur Bremse 33 hin übertragen und führt zu einer Bewegung der Bremsklötze 33-2 auf die Bremsscheibe 34 hin.

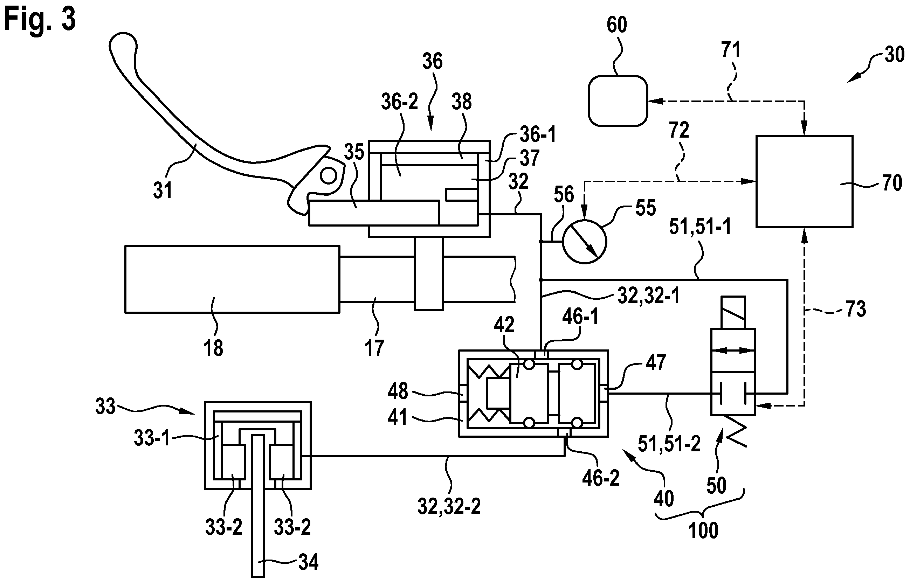

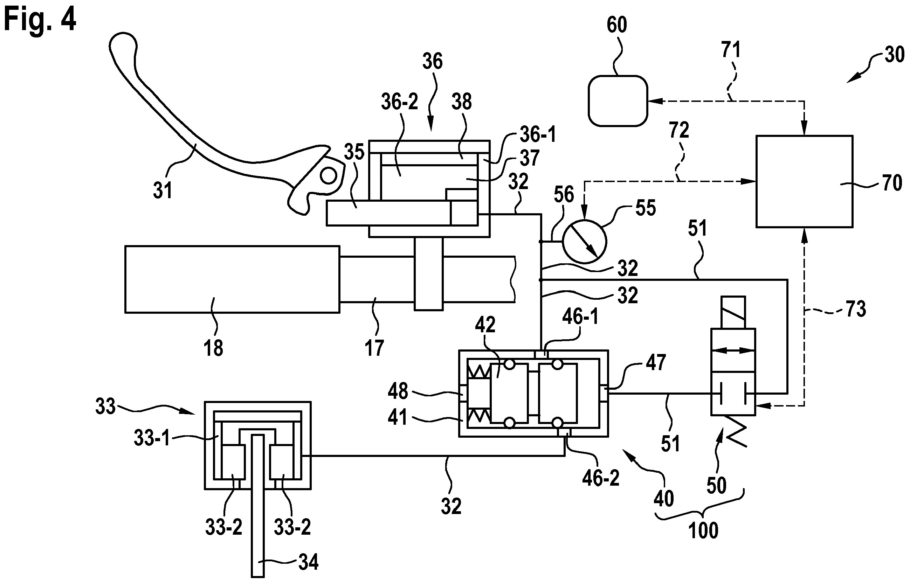

Die Figuren 3 und 4 zeigen in Form von Blockdiagrammen in einem Bremsbetriebszustand bzw. in einem Sperrbetriebszustand eine andere Ausführungsform der erfindungsgemäßen hydraulischen Bremsanlage 30, wobei auch Details der Ausführungsform der verwendeten erfindungsgemäßen Sperreinrichtung 100 dargestellt sind.

Die Bremsanlage 30 besteht aus dem Reservoir oder Zylinder 36 mit dem Bremsfluid 37 im Inneren 36-2 seines Gehäuses 36-1 unter zusätzlicher Bereitstellung eines Ausgleichsvolumens 38.

Der Zylinder 36 ist über die Bremsleitung 32 mit der eigentlichen Bremse 33 verbunden. Die Bremse 33 besteht aus dem Bremssattel 33-1 und den im Bremssattel 33-1 geführten Bremsklötzen 33-2, die geeignet sind, durch Bewegung aufeinander zu die zwischen ihnen angeordnete Bremsscheibe 34 mit Reibung zu beaufschlagen. Dies geschieht genau dann, wenn durch Betätigung des Bremshebels 31 der Kolben 35 im Reservoir 36 das Bremsfluid 37 in die Bremsleitung 32 hinein treibt und somit Druck über die Bremsleitung 32 zur Bremse 33 hin übertragen wird und eine Bewegung der Bremsklötze 33-2 auf die Bremsscheibe 34 zu erzwingt.

Der Bremshebel 31 und das Reservoir 36 sind in der Darstellung der Figuren 3 und 4 neben dem Griff 18 am Lenker 17 des zu Grunde liegenden Fahrzeugs 1 angebracht. Es sind jedoch auch andere Konstellationen denkbar, z.B. mittels eines Fußpedals betätigbare Bremen oder dergleichen.

In der Bremsleitung 32 ist eine Ausführungsform der Sperreinrichtung 100 ausgebildet, welche die Bremsleitung 32 in einen ersten, stromaufwärts und reservoirseitig gelegenen Abschnitt 32-1 und einen zweiten, stromabwärts und bremsseitig gelegenen Abschnitt 32-2 unterteilt.

Die Ausführungsform der erfindungsgemäßen Sperreinrichtung 100 gemäß den Figuren 3 und 4 besteht aus einem Volumenstromschieber 40 und einem Steuerventil 50. Der Volumenstromschieber 40 ist dazu ausgebildet, eine hydraulische Verbindung des Reservoirs 36 und der Bremse 33 über die Bremsleitung 32 in einem Bremsbetriebszustand entweder zu ermöglichen oder in einem Sperrbetriebszustand zu unterbinden, wobei das Steuerventil 50 der Steuerung des Betriebs des Volumenstromschiebers 40 dient.

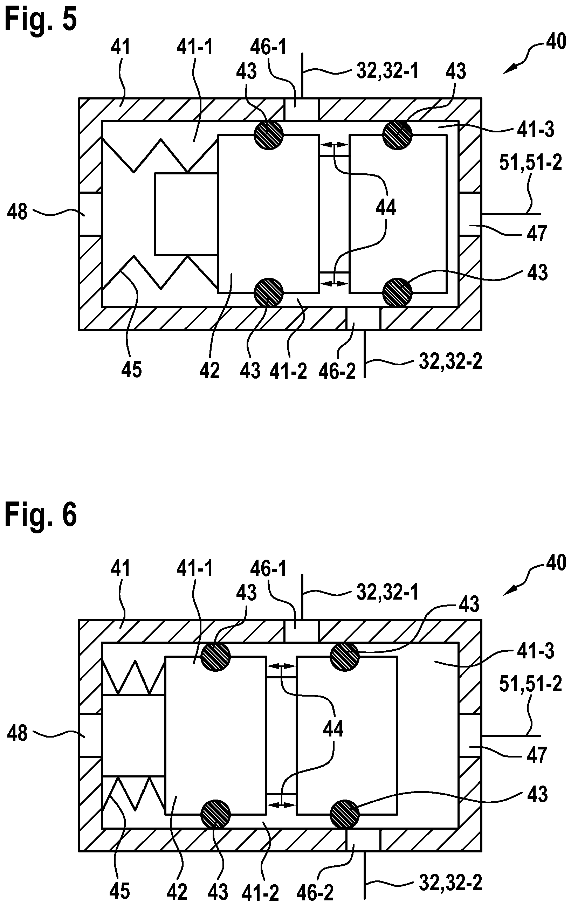

Die Figuren 5 und 6 zeigen in Form von schematischen Blockdiagrammen Details des Volumenstromschiebers 40 in den Zuständen gemäß den Figuren 3 bzw. 4.

Der Volumenstromschieber 40 weist ein Gehäuse 41 auf, in dessen Inneren ein Schieberelement 42 über Dichtungen 43 abdichtend und verschieblich gelagert ist. Das Schieberelement 42 ist über ein Rückstellelement 45 in Form einer Feder federvorgespannt, um im nichtbetätigten Zustand des Volumenstromschiebers 40 eine ungehinderte hydraulische Verbindung des Reservoirs 36 mit der Bremse 33, also eine durchgehende Fluidkommunikation in der Bremsleitung 32 zu gewährleisten.

Dazu weist das Gehäuse 41 des Volumenstromschiebers 40 eine reservoirseitige Hauptöffnung 46-1 und eine bremsseitige Hauptöffnung 46-2 auf. Über die Dichtungen 43 und die Ausgestaltung des Schieberelements 42 mit der Nut 44 besteht in der in den Figuren 3 und 5 gezeigten Stellung des Schieberelements 42 eine durchgehende Fluidkommunikation und somit eine hydraulische Verbindung in der gesamten Bremsleitung 32 vom Reservoir 36 zur Bremse 33 hin. Das bedeutet, dass das Innere des Gehäuses 41 und insbesondere das so genannte Bremskompartiment 41-2 vom Bremsfluid 37 vom Reservoir 36 zur Bremse 33 über die Bremsleitung 32 hin frei durchströmbar ist.

Der in den Figur 3 dargestellte Zustand des Volumenstromschiebers 40 ist in Figur 5 noch einmal in größerem Detail gezeigt. Dort sind auch die durch das Schieberelement 42 und dessen Dichtungen 43 entstehende Aufteilung des Inneren des Gehäuses 41 in das erste oder Ausgleichskompartiment 41-1, das zweite oder Bremskompartiment 41-2 und das dritte oder Sperrkompartiment 41-3 im Detail dargestellt.

Zur Betätigung des Volumenstromschiebers 40 und insbesondere zur Bewegung des Schieberelements 42 entgegen der Federkraft des Rückstellelementes 45 ist an der rechten Stirnseite des Gehäuses 41 des Volumenstromschiebers 40 eine Steueröffnung 47 ausgebildet, über welche mittels einer Umgehungsleitung oder Bypassleitung 51 ein Steuerfluid zugeführt werden kann, welches sich im Steuerkompartiment 41-3 sammelt und das Schieberelement 42 durch Verdrängung von der in den Figuren 3 und 5 gezeigten Stellung nach links in die in den Figuren 4 und 6 gezeigte Stellung verschiebt.

Durch diese Verschiebung wird die hydraulische Verbindung in der Bremsleitung 32 unterbrochen, indem die freie Kommunikation zwischen den ersten und zweiten Hauptöffnungen 46-1 und 46-2 unterbrochen wird. Dies ist im Detail in Figur 6 gezeigt.

Mit der Bewegung des Schieberelements 42 findet ein Übergang vom Bremsbetrieb zum Sperrbetrieb statt.

In der Darstellung gemäß den Figuren 3 bis 6 ist die der Steueröffnung 47 des Gehäuses 41 des Volumenstromschiebers 40 geführte Leitung 51 eine Umgehungsleitung oder Bypassleitung 51, die über die Bremsleitung 32 und deren erstem Abschnitt 32-1 mit dem Bremsfluid 37 beaufschlagt wird, und zwar insbesondere mit dem an der Bremsanlage 30 anliegenden Bremsdruck. Diese Beaufschlagung mit dem Bremsfluid 37 erfolgt jedoch nur bei Aktivierung des Steuerventils 50, d.h. insbesondere im bestromten Fall. Im unbestromten Fall - und somit inhärent sicher - ist das Steuerventil 50 geschlossen und es erfolgt keine Beeinflussung des Volumenstromschiebers 40 und seines Schieberelements 42, welches in der in den Figuren 3 und 5 gezeigten Stellung verbleibt. Nur im bestromten Fall wird gemäß den Figuren 4 und 6 das Schieberelement 42 in die Sperrbetriebsstellung geschoben, so dass die Bremsleitung 32 hydraulisch unterbrochen wird und unter Beibehaltung des Bremsdrucks im zweiten, stromabwärts und bremsseitig gelegenen Abschnitts 32-2 die Bremswirkung der Bremsklötze 33-2 auf die Bremsscheibe 34 zur Sperrung der Bremsscheibe 34 aufrecht erhalten wird.

Die Steuerung der Sperreinrichtung 100 und der Bremsanlage 30 gemäß den Figuren 3 bis 6 kann unter Verwendung einer Auswerte- und Sperrsteuereinheit 70 erfolgen. Diese ist in der Darstellung gemäß den Figuren 3 und 4 über Steuer- und Messleitungen 71, 72 und 73 mit einer Authentifizierungseinheit 60, einem Druckmesssensor 55 und dem Steuerventil 50 verbunden.

Die Auswerte- und Steuersperreinheit 70 ist dazu ausgebildet, das Steuerventil 50 nur dann zu betätigen, also z.B. unter Beaufschlagung mit elektrischem Strom zu öffnen, wenn tatsächlich durch den Sensor 55 ein bestimmter Bremsdruck über die Druckmessleitung 56 in der Bremsleitung 32 der Bremsanlage 30 nachgewiesen ist.

Auf der anderen Seite ist ein erneutes Betätigen des Steuerventils 50 zum Entsperren durch Aufheben des Sperrbetriebszustands und somit ein Übergang in dem normalen Bremsbetriebszustand nur dann durchzuführen, wenn über die Authentifizierungseinheit 60 eine entsprechende Authentifizierung und Verifizierung der Berechtigung zum Aufheben des Sperrbetriebszustands erfolgt. Sobald ein Nutzer über die Authentifizierungseinheit 60 seine Berechtigung zum Aufheben des Sperrbetriebszustands gegeben hat, wird dies über die Steuer- und Messleitung 71 der Auswerte- und Sperrsteuereinheit 70 als Signal mitgeteilt, welche nach Auswertung über die Steuer- und Messleitung 73 das Steuerventil 50 bestromt und dadurch einen Rückfluss des Bremsfluids 37 aus dem dritten oder Sperrkompartiment 41-3 des Gehäuses 41 des Volumenstromschiebers 40 über die Bypassleitung 51 in das Reservoir 36 zurück ermöglicht, Als Folge davon nimmt das Schieberelement 42 unter Wirkung der Rückstellkraft des Rückstellelements 45 die in den Figuren 3 und 5 gezeigte Position ein, so dass die Bremsanlage 30 in den normalen Bremsbetriebszustand zurückkehrt. Dabei wird von den Bremsklötzen 33-2 der Bremse 33 die Bremscheibe 34 freigegeben, das entsprechende Rad 9-1, 9-2 kann wieder frei gedreht werden.

Die Figuren 5 und 6 zeigen in größerem Detail die in den Figuren 3 und 4 schematisch angedeuteten Betriebszustände des Volumenstromschiebers 40, wobei der in Figur 5 dargestellte Betriebszustand dem Bremsbetriebszustand der Bremsanlage 30 entspricht, der in Figur 6 gezeigte Zustand des Volumenstromschiebers 40 entspricht dagegen dem Sperrbetriebszustand der zu Grunde liegenden Bremsanlage 30.

In den Figuren 3 bis 6 ist noch eine der Steueröffnung 47 gegenüberliegende Ausgleichsöffnung 48 dargestellt, welche den Druckausgleich im ersten oder Ausgleichskompartiment 41-1 des Gehäuses 41 des Volumenstromschiebers 40 erlaubt und somit die Beweglichkeit des Schieberelements 42 im Inneren des Gehäuses 41 verbessert.

Diese und weitere Merkmale und Eigenschaften der vorliegenden Erfindung werden an Hand der folgenden Darlegungen weiter erläutert:
Fahrräder und andere Fahrzeuge 1 mit hohem Anschaffungswert werden von ihren Eigentümern gezielt gegen Diebstahl geschützt. Eine der beliebtesten Methoden ist hierbei das An- bzw. Abschließen des Fahrrades mittels eines Schlosses. Bei Pedelecs ist dieser Umstand stark ausgeprägt, da hier die Anschaffungskosten besonders hoch sind.

Jedoch sind die meisten Schlösser für Diebe kein Problem. Sobald das Schloss geknackt wurde, kann das Fahrrad einfach fortbewegt werden.

Es ist eine Aufgabe der Erfindung, das Wegschieben von Fahrrädern und dergleichen weiter zu erschweren, sobald diese sich im abgeschlossenen Zustand befinden. Hierfür wird eine Sperreinrichtung 100 installiert, die das Drehen der Räder 9-1, 9-2 verhindert oder erschwert, wobei sich die Vorrichtung insbesondere auf dem Vorhandensein einer hydraulischen Bremsanlage 30 beruht.

Ein Kernaspekt der vorliegenden Erfindung ist in dem in Figur 2 dargestellten System gezeigt.

Eine Ausführungsform kann aus drei Elementen bestehen, die als Einheit in den hydraulischen Bremskreis 30 integriert werden können.
(1) Ein Drucksensor 55 erfasst den Druck im Bremskreis 32 der Bremsanlage 30, der durch einen Bremshebel 31 erzeugt wird.
(2) Ein Magnetventil 50 ist im Grundzustand - z.B. in einem stromlosen Zustand - geschlossen und öffnet, sobald es bestromt wird.
(3) Das dritte Element ist ein Volumenstromschieber 40. Im Grundzustand strömt Flüssigkeit aus einem Flüssigkeitsreservoir 36 der Bremsanlage 30 in den Bremssattel 33-1 einer Bremse 33.

Wird das Magnetventil 50 bestromt, so liegt an der rechten Seite und mithin an der Steueröffnung 47 des Volumenstromschiebers 40 Druck an und der Volumenstromschieber 40 wird entgegen der Federkraft der Feder als Rückstellelement 45 nach links verschoben auf die Ausgleichsöffnung 48 zu. Entfällt der Druck auf der rechten Seite des Volumenstromschiebers 40 und mithin an der Steueröffnung 48, so bewegt die Federkraft der Feder als Rückstellelement 45 den Volumenstromschieber 40 wieder nach rechts in Richtung auf die Steueröffnung 47 zu.

Durch Schließen des Magnetventiles 50 durch Wegnahme des Stromes wird der anliegende Druck zwischen Magnetventil 50 und Bremssattel 33-1 der Bremse 33 aufrecht erhalten, wodurch der Volumenstromschieber 40 in der linken Position verbleibt. Der Bremshebel 31 ist in diesem Zustand somit vom Bremssattel 33-1 der Bremse 33 entkoppelt und der Druck zwischen Magnetventil 40 und Bremssattel 33-1 der Bremse 33 kann für einen längeren Zeitraum auf einfache Weise aufrecht erhalten werden, weil sich die Länge der Bremsleitung 32 stark reduziert und das Flüssigkeits-Luftreservoir 36 am Bremshebel 31 entkoppelt wurde.

Das System kann vom Nutzer die Information erhalten, dass das Fahrrad 1 abgeschlossen werden soll. Diese Information kann an das System z.B. durch eine App, durch HMI-Eingabe, oder durch Ausschalten des Systems erfolgen.

Der Nutzer betätigt die Bremse 33 über den Bremshebel 31 und der Druckanstieg wird vom Drucksensor 55 erfasst. Dieser gibt diese Information an eine Auswerteeinrichtung - z.B. eine Auswerte- und Sperrsteuereinheit 70 - weiter und das Magnetventil 50 wird geöffnet.

Da Druck in der Bremsleitung 32 anliegt verschiebt sich der das Schieberelement 42 im Volumenstromschieber 40 von rechts nach links entgegen der Federkraft der Feder als Rückstellelement 45 im Volumenstromschieber 40. Durch den Druckanstieg wird die hydraulische Bremse 33 aktiviert und die Bremsscheibe 34 zwischen den Bremsklötzen 33-2 gehalten.

Lässt der Nutzer den Bremshebel 31 wieder los, so kommt es zum Druckabfall in der Bremsleitung 32. Dieser Druckabfall wird vom Drucksensor 55 erfasst und diese Information an die Auswerte- und Steuereinrichtung 70 weitergegeben. Daraufhin wird das Magnetventil 50 geschlossen. Da zwischen Magnetventil 50 und Volumenstromschieber 40 immer noch Druck vorherrscht, bleibt das Schieberelement 42 des Volumenstromschiebers 40 in der linken Position, wodurch der Bremshebel 31 vom Bremssattel 33-1 entkoppelt ist.

Im abgeschlossenen Zustand bleibt der Druck zwischen Volumenstromschieber 40 und Bremssattel 33-1 erhalten, wodurch die Bremse 33 aktiviert bleibt und das Fahrrad 1 nicht mehr fortbewegt werden kann, außer man hebt es an.

Der Druck in der Bremsleitung 32 kann so gewählt werden, dass sich das Rad 9-1, 9-2 durch Schieben des Fahrzeuges 1 nicht mehr mühelos drehen lässt.

Wird vom Nutzer die Information an das System gegeben, dass das Fahrrad 1 aufgeschlossen werden soll, so wird das Magnetventil 50 geöffnet. Da sich im oberen Druckkreislauf zwischen Bremshebel 31 und Magnetventil 50 Atmosphärendruck befindet, kommt es bei Öffnen des Magnetventils 50 zum Druckausgleich. In der Bremsleitung 32 liegt wieder Atmosphärendruck an und das Fahrrad 1 kann wie gewohnt genutzt werden.

## Patentansprüche

1. Sperreinrichtung (100) für eine hydraulische Bremsanlage (30), insbesondere für ein mit Muskelkraft und/oder mit Motorkraft antreibbares Fahrzeug (1), Fahrrad, Elektrofahrrad, eBike, Pedelec oder dergleichen, bei welcher:
- in einem Bremsbetriebszustand ein stromaufwärts und reservoirseitig gelegener Abschnitt (32-1) einer Bremsleitung (32) der Bremsanlage (30) und ein stromabwärts und bremsseitig gelegener Abschnitt (32-2) der Bremsleitung (32) der Bremsanlage (30) hydraulisch verbindbar sind,
- in einem Sperrbetriebszustand der stromaufwärts und reservoirseitig gelegene Abschnitt (32-1) der Bremsleitung (32) und der stromabwärts und bremsseitig gelegene Abschnitt (32-2) der Bremsleitung (32) hydraulisch voneinander trennbar sind und der stromabwärts und bremsseitig gelegene Abschnitt (32-2) der Bremsleitung (32) hydraulisch und druckhaltend abschließbar ist,
- ein Volumenstromschieber (40) mit einem Gehäuse (41) und einem Schieberelement (42) ausgebildet ist,
- das Schieberelement (42) im Gehäuse (41) verschiebbar ist zwischen einer dem Bremsbetriebszustand entsprechenden ersten Stellung und einer dem Sperrbetriebszustand entsprechenden zweiten Stellung und
- der Volumenstromschieber (40) eingerichtet ist, das Schieberelement (42) über einen im stromaufwärts und reservoirseitig gelegenen Abschnitt (32-1) der Bremsleitung (32) herrschenden Druck gesteuert in die dem Sperrbetriebszustand entsprechende zweite Stellung zu verschieben.

2. Sperreinrichtung (100) nach Anspruch 1,
- bei welcher das Gehäuse (41) des Volumenstromschiebers (40) eine erste, stromaufwärts und reservoirseitig gelegene Hauptöffnung (46-1) und eine zweite, stromabwärts und bremsseitig gelegene Hauptöffnung (46-2) aufweist, insbesondere zur hydraulischen Verbindung mit der Bremsleitung (32) der Bremsanlage (30),
- bei welcher in der ersten Stellung des Schieberelements (42) die erste und die zweite Hauptöffnung (46-1, 46-2) des Gehäuses (41) hydraulisch verbunden und gekoppelt sind und
- bei welcher in der zweiten Stellung des Schieberelements (42) die erste und die zweite Hauptöffnung (46-1, 46-2) des Gehäuses (41) hydraulisch getrennt und entkoppelt sind.

3. Sperreinrichtung (100) nach einem der vorangehenden Ansprüche, bei welcher das Gehäuse (41) des Volumenstromschiebers (40) eine Steueröffnung (47) aufweist zur hydraulischen Steuerung der Stellung des Schieberelements (42), insbesondere über eine hydraulische Verbindung mit einem stromaufwärts und reservoirseitig gelegenen Abschnitt (32-1) der Bremsleitung (32) der Bremsanlage (30), vorzugsweise mittels einer Umgehungsleitung (51).

4. Sperreinrichtung (100) nach einem der vorangehenden Ansprüche 2 bis 3, mit einem Steuerventil (50), welches zum gesteuerten Zuführen eines Fluids und so zur hydraulischen Steuerung der Stellung des Schieberelements (42) ausgebildet ist und welches insbesondere mit der Steueröffnung (47) hydraulisch verbunden und gekoppelt ist und/oder in der Umgehungsleitung (51) ausgebildet ist.

5. Sperreinrichtung (100) nach einem der Ansprüche 2 bis 4, bei welcher das Steuerventil (50) ein im Normalzustand geschlossenes Ventil ist, insbesondere ein stromlos geschlossenes Magnetventil.

6. Sperrsystem für eine hydraulische Bremsanlage (30), insbesondere für ein mit Muskelkraft und/oder mit Motorkraft antreibbares Fahrzeug (1), Fahrrad, Elektrofahrrad, eBike, Pedelec oder dergleichen, mit
- einer Sperreinrichtung (100) nach einem der Ansprüche 1 bis 5 und
- einer Auswerte- und Steuereinheit (70), welche zur Steuerung des Zustands der Sperreinrichtung (100) ausgebildet ist, insbesondere über eine Steuerung des Zustands des Steuerventils (50).

7. Sperrsystem nach Anspruch 6,
welche eine Authentifizierungseinheit (60) aufweist, über welche nur unter Verwendung eines Autorisierungsmittels ein bestehender Sperrbetriebszustand der Sperreinrichtung (100) und somit eine Sperrung der Bremsanlage (30) aufhebbar ist, insbesondere im Zusammenwirken mit einer oder der Auswerte- und Steuereinheit (70).

8. Sperrsystem nach Anspruch 7,
bei welcher die Authentifizierungseinheit (60) und/oder das Authentifizierungsmittel realisiert sind im Zusammenhang mit einem RFID-Mittel, einem PIN-Mittel, einem Passwortschutz, einem Schutz über biometrische Merkmale oder dergleichen, insbesondere im Zusammenhang mit einer Ultraschall-, Infrarot- und/oder Funkkommunikation, vorzugsweise mittels eines Mobiltelefons.

9. Hydraulische Bremsanlage (30) für ein mit Muskelkraft und/oder mit Motorkraft antreibbares Fahrzeug (1), ein Fahrrad, Elektrofahrrad, eBike, Pedelec oder dergleichen,
mit:
- einem Reservoir (36) für ein Bremsfluid (37),
- einer Bremse (33),
- einer Bremsleitung (32) zur hydraulischen Verbindung des Reservoirs (36) mit der Bremse (33) und
- einer Sperreinrichtung (100) nach einem der Ansprüche 1 bis 5, welche in der Bremsleitung (32) integriert ist, und insbesondere mit einem Sperrsystem nach einem der Ansprüche 6 bis 8.

10. Mit Muskelkraft und/oder mit Motorkraft antreibbares Fahrzeug (1) und insbesondere Fahrrad, Elektrofahrrad, eBike, Pedelec oder dergleichen, mit:
- mindestens einem Rad (9-1, 9-2) und
- einer Bremsanlage (30) nach Anspruch 9 zum Bremsen und/oder Sperren des mindestens einen Rades (9-1, 9-2).

11. Verfahren zum Sperren einer hydraulische Bremsanlage (30), insbesondere für ein mit Muskelkraft und/oder mit Motorkraft antreibbares Fahrzeug (1), Fahrrad, Elektrofahrrad, eBike, Pedelec oder dergleichen, bei welchem:
- in einem Bremsbetriebszustand ein stromaufwärts und reservoirseitig gelegener Abschnitt (32-1) einer Bremsleitung (32) der Bremsanlage (30) und ein stromabwärts und bremsseitig gelegener Abschnitt (32-2) der Bremsleitung (32) der Bremsanlage (30) hydraulisch verbunden werden,
- in einem Sperrbetriebszustand der stromaufwärts und reservoirseitig gelegene Abschnitt (32-1) der Bremsleitung (32) und der stromabwärts und bremsseitig gelegene Abschnitt (32-2) der Bremsleitung (32) hydraulisch voneinander getrennt werden und der stromabwärts und bremsseitig gelegene Abschnitt (32-2) der Bremsleitung (32) hydraulisch und druckhaltend abgeschlossen wird,
- in einem Volumenstromschieber (40) mit einem Gehäuse (41) und einem Schieberelement (42) das Schieberelement (42) im Gehäuse (41) gesteuert zwischen einer dem Bremsbetriebszustand entsprechenden ersten Stellung und einer dem Sperrbetriebszustand entsprechenden zweiten Stellung verschoben wird und
- das Schieberelement (42) über einen im stromaufwärts und reservoirseitig gelegenen Abschnitt (32-1) der Bremsleitung (32) herrschenden Druck gesteuert in die dem Sperrbetriebszustand entsprechende zweite Stellung verschoben wird.

## Claims

1. Locking device (100) for a hydraulic brake system (30), in particular for a vehicle (1) which can be driven by way of muscle power and/or by way of motor power, bicycle, electric bicycle, eBike, pedelec or the like, in the case of which locking device (100):
- in a brake operating state, a section (32-1) of a brake line (32) of the brake system (30), which section (32-1) lies upstream and on the reservoir side, and a section (32-2) of the brake line (32) of the brake system (30), which section (32-2) lies downstream and on the brake side, can be connected hydraulically,
- in a locking operating state, that section (32-1) of the brake line (32) which lies upstream and on the reservoir side and that section (32-2) of the brake line (32) which lies downstream and on the brake side can be disconnected hydraulically from one another, and that section (32-2) of the brake line (32) which lies downstream and on the brake side can be closed hydraulically and in a pressure-retaining manner,
- a volumetric flow slide valve (40) is configured with a housing (41) and a slide valve element (42),
- the slide valve element (42) can be displaced in the housing (41) between a first position which corresponds to the brake operating state and a second position which corresponds to the locking operating state, and
- the volumetric flow slide valve (40) is set up to displace the slide valve element (42) into the second position which corresponds to the locking operating state in a manner which is controlled via a pressure which prevails in that section (32-1) of the brake line (32) which lies upstream and on the reservoir side.

2. Locking device (100) according to Claim 1,
- in the case of which locking device (100) the housing (41) of the volumetric flow slide valve (40) has a first main opening (46-1) which lies upstream and on the brake side and a second main opening (46-2) which lies downstream and on the brake side, in particular for the hydraulic connection to the brake line (32) of the brake system (30),
- in the case of which locking device (100) the first and the second main opening (46-1, 46-2) of the housing (41) are coupled and connected hydraulically in the first position of the slide valve element (42), and
- in the case of which locking device (100) the first and the second main opening (46-1, 46-2) of the housing (41) are decoupled and disconnected hydraulically in the second position of the slide valve element (42).

3. Locking device (100) according to either of the preceding claims, in the case of which locking device (100) the housing (41) of the volumetric flow slide valve (40) has a control opening (47) for the hydraulic control of the position of the slide valve element (42), in particular via a hydraulic connection to a section (32-1) of the brake line (32) of the brake system (30), which section (32-1) lies upstream and on the reservoir side, preferably by means of a bypass line (51).

4. Locking device (100) according to either of the preceding Claims 2 and 3, having a control valve (50) which is configured for the controlled feeding of a fluid and thus for the hydraulic control of the position of the slide valve element (42) and which is coupled and connected hydraulically, in particular, to the control opening (47) and/or is configured in the bypass line (51) .

5. Locking device (100) according to one of Claims 2 to 4, in the case of which locking device (100) the control valve (50) is a normally closed valve, in particular a solenoid valve which is closed in a currentless state.

6. Locking system for a hydraulic brake system (30), in particular for a vehicle (1) which can be driven by way of muscle power and/or by way of motor power, bicycle, electric bicycle, eBike, pedelec or the like, having
- a locking device (100) according to one of Claims 1 to 5, and
- an evaluation and control unit (70) which is configured for controlling the state of the locking device (100), in particular via a control of the state of the control valve (50).

7. Locking system according to Claim 6, which has an authentication unit (60), via which an existing locking operating state of the locking device (100) and therefore locking of the brake system (30) can be cancelled only with the use of an authorization means, in particular in interaction with an or the evaluation and control unit (70) .

8. Locking system according to Claim 7, in which the authentication unit (60) and/or the authentication means are/is realised in conjunction with an RFID means, a PIN means, a password protection means, a protection means via biometric features or the like, in particular in conjunction with an ultrasonic, infrared and/or radio communications means, preferably by means of a mobile telephone.

9. Hydraulic brake system (30) for a vehicle (1) which can be driven by way of muscle power and/or by way of motor power, bicycle, electric bicycle, eBike, pedelec or the like,
having:
- a reservoir (36) for a brake fluid (37),
- a brake (33),
- a brake line (32) for the hydraulic connection of the reservoir (36) to the brake (33), and
- a locking device (100) according to one of Claims 1 to 5 which is integrated into the brake line (32), and, in particular, having a locking system according to one of Claims 6 to 8.

10. Vehicle (1) which can be driven by way of muscle power and/or by way of motor power and, in particular, bicycle, electric bicycle, eBike, pedelec or the like, having:
- at least one wheel (9-1, 9-2), and
- a brake system (30) according to Claim 9 for braking and/or locking the at least one wheel (9-1, 9-2).

11. Method for locking a hydraulic brake system (30), in particular for a vehicle (1) which can be driven by way of muscle power and/or by way of motor power, bicycle, electric bicycle, eBike, pedelec or the like, in the case of which method:
- in a brake operating state, a section (32-1) of a brake line (32) of the brake system (30), which section (32-1) lies upstream and on the reservoir side, and a section (32-2) of the brake line (32) of the brake system (30), which section (32-2) lies downstream and on the brake side, are connected hydraulically,
- in a locking operating state, that section (32-1) of the brake line (32) which lies upstream and on the reservoir side and that section (32-2) of the brake line (32) which lies downstream and on the brake side are disconnected hydraulically from one another, and that section (32-2) of the brake line (32) which lies downstream and on the brake side is closed hydraulically and in a pressure-retaining manner,
- in a volumetric flow slide valve (40) having a housing (41) and a slide valve element (42), the slide valve element (42) can be displaced in the housing (41) between a first position which corresponds to the brake operating state and a second position which corresponds to the locking operating state, and
- the slide valve element (42) is displaced into the second position which corresponds to the locking operating state in a manner which is controlled via a pressure which prevails in that section (32-1) of the brake line (32) which lies upstream and on the reservoir side.

## Revendications

1. Dispositif de verrouillage (100) pour un système de freinage hydraulique (30), en particulier pour un véhicule (1), vélo, vélo électrique, vélo à assistance électrique, pédélec ou similaire pouvant être propulsé par force musculaire et/ou par force de moteur, dans lequel :
- dans un état de fonctionnement de freinage, une partie (32-1), située en amont et côté réservoir, d'une conduite de frein (32) du système de freinage (30) et une partie (32-2), située en aval et côté frein, de la conduite de frein (32) du système de freinage (30) peuvent être reliées de manière hydraulique,
- dans un état de fonctionnement de verrouillage, la partie (32-1), située en amont et côté réservoir, de la conduite de frein (32) et la partie (32-2), située en aval et côté frein, de la conduite de frein (32) peuvent être séparées l'une de l'autre de manière hydraulique, et la partie (32-2), située en aval et côté frein, de la conduite de frein (32) peut être fermée de manière hydraulique et de manière à maintenir la pression,
- une soupape de débit volumique (40) dotée d'un carter (41) et d'un élément tiroir (42) est réalisée,
- l'élément tiroir (42) est coulissant dans le carter (41) entre une première position correspondant à l'état de fonctionnement de freinage et une deuxième position correspondant à l'état de fonctionnement de verrouillage et
- la soupape de débit volumique (40) est conçue pour déplacer l'élément tiroir (42) dans la deuxième position correspondant à l'état de fonctionnement de verrouillage de manière commandée par le biais d'une pression régnant dans la partie (32-1), située en amont et côté réservoir, de la conduite de frein (32) .

2. Dispositif de verrouillage (100) selon la revendication 1,
- dans lequel le carter (41) de la soupape de débit volumique (40) comprend une première ouverture principale (46-1) située en amont et côté réservoir et une deuxième ouverture principale (46-2) située en aval et côté frein, en particulier pour la liaison hydraulique à la conduite de frein (32) du système de freinage (30),
- dans lequel, dans la première position de l'élément tiroir (42), la première et la deuxième ouverture principale (46-1, 46-2) du carter (41) sont reliées et accouplées hydrauliquement et
- dans lequel, dans la deuxième position de l'élément tiroir (42), la première et la deuxième ouverture principale (46-1, 46-2) du carter (41) sont séparées et désaccouplées hydrauliquement.

3. Dispositif de verrouillage (100) selon l'une quelconque des revendications précédentes,
dans lequel le carter (41) de la soupape de débit volumique (40) comprend une ouverture de commande (47) pour la commande hydraulique de la position de l'élément tiroir (42), en particulier par le biais d'une liaison hydraulique avec une partie (32-1), située en amont et côté réservoir, de la conduite de frein (32) du système de freinage (30), de préférence au moyen d'une conduite de dérivation (51) .

4. Dispositif de verrouillage (100) selon l'une quelconque des revendications précédentes 2 et 3, comprenant une soupape de commande (50), laquelle est conçue pour l'acheminement commandé d'un fluide et donc pour la commande hydraulique de la position de l'élément tiroir (42), et laquelle est en particulier reliée et accouplée hydrauliquement à l'ouverture de commande (47) et/ou est réalisée dans la conduite de dérivation (51).

5. Dispositif de verrouillage (100) selon l'une quelconque des revendications 2 à 4,
dans lequel la soupape de commande (50) est une soupape fermée à l'état normal, en particulier une électrovalve fermée sans courant.

6. Système de verrouillage pour un système de freinage hydraulique (30), en particulier pour un véhicule (1), vélo, vélo électrique, vélo à assistance électrique, pédélec ou similaire pouvant être propulsé par force musculaire et/ou par force de moteur, comprenant
- un dispositif de verrouillage (100) selon l'une quelconque des revendications 1 à 5 et
- une unité d'évaluation et de commande (70), laquelle est conçue pour la commande de l'état du dispositif de verrouillage (100), en particulier par le biais d'une commande de l'état de la soupape de commande (50) .

7. Système de verrouillage selon la revendication 6, lequel comprend une unité d'authentification (60), par le biais de laquelle un état de fonctionnement de verrouillage existant du dispositif de verrouillage (100) et par conséquent un verrouillage du système de freinage (30) ne peuvent être suspendus que par utilisation d'un moyen d'autorisation, en particulier en coopération avec une ou l'unité d'évaluation et de commande (70).

8. Système de verrouillage selon la revendication 7, dans lequel l'unité d'authentification (60) et/ou le moyen d'authentification sont réalisés en rapport avec un moyen RFID, un moyen à numéro d'identification personnelle, une protection par mot de passe, une protection par caractéristiques biométriques ou similaire, en particulier en rapport avec une communication par ultrasons, par infrarouges et/ou radio, de préférence au moyen d'un téléphone mobile.

9. Système de freinage hydraulique (30) pour un véhicule (1), vélo, vélo électrique, vélo à assistance électrique, pédélec ou similaire pouvant être propulsé par force musculaire et/ou par force de moteur,
comprenant :
- un réservoir (36) pour un fluide de frein (37),
- un frein (33),
- une conduite de frein (32) pour la liaison hydraulique du réservoir (36) au frein (33) et
- un dispositif de verrouillage (100) selon l'une quelconque des revendications 1 à 5, lequel est intégré dans la conduite de frein (32), et en particulier comprenant un système de verrouillage selon l'une quelconque des revendications 6 à 8.

10. Véhicule (1) pouvant être propulsé par force musculaire et/ou par force de moteur, et en particulier vélo, vélo électrique, vélo à assistance électrique, pédélec ou similaire,
comprenant :
- au moins une roue (9-1, 9-2) et
- un système de freinage (30) selon la revendication 9 pour freiner et/ou verrouiller ladite au moins une roue (9-1, 9-2).

11. Procédé de verrouillage d'un système de freinage hydraulique (30), en particulier pour un véhicule (1), vélo, vélo électrique, vélo à assistance électrique, pédélec ou similaire pouvant être propulsé par force musculaire et/ou par force de moteur, dans lequel :
- dans un état de fonctionnement de freinage, une partie (32-1), située en amont et côté réservoir, d'une conduite de frein (32) du système de freinage (30) et une partie (32-2), située en aval et côté frein, de la conduite de frein (32) du système de freinage (30) sont reliées de manière hydraulique,
- dans un état de fonctionnement de verrouillage, la partie (32-1), située en amont et côté réservoir, de la conduite de frein (32) et la partie (32-2), située en aval et côté frein, de la conduite de frein (32) sont séparées l'une de l'autre de manière hydraulique, et la partie (32-2), située en aval et côté frein, de la conduite de frein (32) est fermée de manière hydraulique et de manière à maintenir la pression,
- dans une soupape de débit volumique (40) dotée d'un carter (41) et d'un élément tiroir (42), l'élément tiroir (42) est déplacé dans le carter (41) de manière commandée entre une première position correspondant à l'état de fonctionnement de freinage et une deuxième position correspondant à l'état de fonctionnement de verrouillage et
- l'élément tiroir (42) est déplacé dans la deuxième position correspondant à l'état de fonctionnement de verrouillage de manière commandée par le biais d'une pression régnant dans la partie (32-1), située en amont et côté réservoir, de la conduite de frein (32).
